# EUROPÄISCHE PATENTSCHRIFT

(11) **EP 1 997 366 B1**
(45) Veröffentlichungstag und Bekanntmachung des Hinweises auf die Patenterteilung: **20.10.2010**
(21) Anmeldenummer: 08102560.3
(22) Anmeldetag: 13.03.2008
(51) Int. Cl.: A01D 75/18

(54) **Landwirtschaftliche Erntemaschine mit einer Fremdkörpererkennungsvorrichtung**
Agricultural harvester with a foreign object recognition device
Moissonneuse agricole dotée d'un dispositif de détection des corps étrangers

(30) Priorität: 30.05.2007 DE 102007025310
(43) Veröffentlichungstag der Anmeldung: 03.12.2008
(73) Patentinhaber: CLAAS Selbstfahrende Erntemaschinen GmbH, 33428 Harsewinkel (DE)
(72) Erfinder: Pollklas, Manfred, 33378, Rheda-Wiedenbrück (DE); Clausing, Andreas, 32832, Augustdorf (DE)

(56) Entgegenhaltungen:
- EP-A- 1 064 834
- EP-A- 1 523 876
- WO-A-01/65919
- US-A- 3 896 608

## Beschreibung

Die Erfindung betrifft eine landwirtschaftliche Erntemaschine mit einer Einzugsvorrichtung zur Weiterleitung von geerntetem Erntegut zu nachfolgenden Bearbeitungsaggregaten, wobei die Einzugsvorrichtung mit einer Fremdkörpererkennungsvorrichtung zum Erkennen von Fremdkörpern im Erntegutstrom und mit Einrichtungen zum unmittelbaren Stoppen der Zuführeinrichtungen bei Feststellung eines Fremdkörpers im Erntegut versehen ist.

Zuführeinrichtungen in Form von Erntevorsatzgeräten mit Fremdkörpererkennungseinrichtungen werden in der Regel in landwirtschaftlichen Erntemaschinen, insbesondere in Feldhäckslern, eingesetzt, um eventuell gemeinsam mit dem Erntegut in die Maschine eingedrungene Meiai!körper - z.B. einen Wenderzinken, Weidezaunpfahl, Getränkedose oder einen Nagel zu erkennen und in diesem Fall die Zuführeinrichtung und nachfolgende Bearbeitungsorgane automatisch abzuschalten. Dadurch soll verhindert werden, dass die Metallteile Schäden innerhalb der landwirtschaftlichen Erntemaschine verursachen oder später beim Verfüttern des geernteten Erntegutes von den Tieren aufgenommen werden und zu Versetzungen oder sogar zum Tod von Tieren führen kann. Bei einem typischen Aufbau besteht eine solche Zuführeinrichtung aus einem oder mehreren hintereinander geschalteten Einzugswalzenpaaren, Erntegut, das von einem Erntevorsatzgerät der Erntemaschine aufgenommen wird, wird von den Walzen eingezogen und beispielsweise einer nachfolgenden Häckseltrommel oder einem anderen Arbeitsaggregat zugeleitet

Eine solche Fremdkörpererkennungseinrichtung ist aus der DD 247 117 A3 bekannt, bei der in einer Förderwalze, die mit einer Förderwalze zusammenarbeitet, ein Metalldetektor angeordnet ist. Der Metalldetektor ist dabei üblicherweise innerhalb einer der vorderen Einzugswalzen ortsfest gelagert, Der Erfassungsbereich des Metalldetektors wird von einem von der Magnetanordnung erzeugten Mess-Magnetfeld gebildet, Dabei ist das Mess-Magnetfeld vorzugsweise in etwa senkrecht von unten in den Erntegutstrom bzw. oft auch schräg nach vorne, in Richtung des Erntevorsatzgerätes ausgerichtet, Das dabei gemessene Detektorsignal wird ständig gemessen und mit einem vordefinierten Schwellwert verglichen, wobei bei dessen Überschreiten ein Abschaltsignal an die Fördervorrichtung gegeben wird,

Im weiteren sind Fremdkörpererkennungseinrichtungen in Form von Steindetektoren bekannt, die die Arbeitsaggregate vor der Beschädigung durch Steine, die mit dem Erntegut zugeführt werden, sichern sollen, Eine derartige Fremdkörpererkennungseinrichtung ist aus der DD-PS 247 118 bekannt, bei der die Beschleunigung an einem senkrecht zur Fördereinrichtung beweglichen Teil der Fördereinrichtung gemessen und bewertet wird, Bei Überschreitung einer bestimmten Beschleunigungsschwelle wird ein Stoppsignal ausgelöst, das der Stoppeinrichtung der Förderelemente zugeführt wird.

EP-A-1523876 offenbart eine Erntemaschine mit einer Metalldetektionseinrichtung, die ein Stoppsignal an eine Schnellstopschaltung gibt, wodurch die gesamte Erntemaschine sofort angehalten wird.

Nachteilig an den bekannten Fremdkörpererkennungsvorrichtungen und deren Nutzung in landwirtschaftlichen Erntemaschinen ist jedoch, dass die landwirtschaftliche Erntemaschine aufgrund des Stoppens sämtlicher Arbeitsorgane kein Erntegut mehr aufnehmen kann. Da vom Auslösen der Fremdkorpererkennungseinnchtung bis zum Stoppen der Erntemaschine, aufgrund der Reaktionszeit des Bedieners, eine gewisse Zeitspanne vergeht, kann es zu Aufstauungen von Erntegut kommen. Insbesondere ein Feldhäcksler in der Grasernte fährt hohe Erntegeschwindigkeiten, so dass dieser im Falle der Fremdkörpererkennung z.T, riesige Schwaden Gras vor sich herschiebt, bevor der Feldhäcksler zum Stillstand kommt. Wenn diese Anhäufungen des Erntegutes nach Beseitigung des Fremdkörpers dann von der Erntemaschine aufgenommen werden müssen, führt dies häufig zu Überlastungen der Erntemaschine, die zu Schäden führen können, im Fall, dass es sich um noch abzuerntendes Erntegut, wie Mais, handelt, kommt es dann zu dessen Überfahren und Niederdrücken, welches bei häufigen Ansprechen der Fremdkörpererkennungseinrichtung zu nicht vernachlässigbaren Erntegutverlusten führen kann.

Der Erfindung liegt deshalb die Aufgabe zugrunde, die Nachteile des zitierten Standes der Technik zu vermeiden und eine eine Fremdkörpererkennungsvorrichtung aufweisende landwirtschaftliche Erntemaschine der eingangs genannten Art derart weiterzuenwckeln, dass beim Erkennen eines Fremdkörpers durch die Fremdkörpererkennungseinrichtung möglichst Aufstauungen von Erntegut bzw. dessen Überfahren und Niederdrücken vermieden werden,

Diese Aufgabe wird erfindungsgemäß durch die kennzeichnenden Merkmale der Patentanspruchs 1 gelöst, wobei in den weiteren Patentansprüchen Merkmale aufgeführt sind, die diese Lösung in vorteilhafter Weise weiterentwickeln.

Indem beim Erkennen eines Fremdkörpers im Erntegutstrom durch die Fremdkörpererkennungsvornchtung die Erntemaschine automatisch abgebremst und/oder die Rücknahme des wenigstens einen Energiespeichermediums zur Reduzierung der Fahrgeschwindigkeit der landwirtschaftlichen Erntemaschine erfolgt, ist sichergestellt, dass weitestgehend ein Aufstauen von Erntegut, wie z.B, in Schwaden abgelegtes Gras bzw, ein Überfahren und Niederdrücken des noch zu erntenden Erntegutes, wie z.B. Mais vermieden wird. Dabei ist der Wert für die Bremswirkung und/oder für die Rücknahme der Fahrgeschwindigkeit einstellbar, so dass durch die Möglichkeit der variablen Einstellung, stets die situations- bzw. erntebedingt optimale Einstellung gewählt werden kann. Vorzugsweise ist das wenigstens eine Energiespeichermedium der Kraftstoff zum Betreiben des Antriebsmotors und/oder das Öl zum Betreiben eines hydrostatischen Fahrantriebes der landwirtschaftlichen Erntmaschine,

Dadurch, dass das Abbremsen und/oder die Rücknahme des wenigstens einen Energiespeichermediums zur Reduzierung der Fahrtgeschwindigkeit der Erntemaschine zum Erreichen des Stillstandes der Erntemaschine bei einer Fremdkörpererkennung in Abhängigkeit von mindestens einem Schwellwert, wie die Erntegutart, die Fahrgeschwindigkeit der landwirtschaftlichen Erntemaschine oder die Hangneigung des Erntefeldes einstellbar ist, erfolgt vorteilhaft eine Entlastung für den Bediener der Erntemaschine. Insbesondere erfolgt in Abhängigkeit von der Erntegutart der Erntebetrieb mit unterschiedlichen Erntegeschwindigkeiten, wobei dann entsprechend im Falle einer Fremdkörpererkennung der Wert für die Bremswirkung und/oder für die Rücknahme des wenigstens einen Energiespeichermediums so einstellbar ist, dass beispielhaft bei einer hohen Erntebetriebsgeschwindigkeit ein abruptes Abstoppen, quasi eine Vollbremsung der landwirtschaftlichen Erntemaschine vermieden wird, um den in der Regel nicht vorgewarnten Bediener der Erntemaschine vor Verletzungen zu schützen, Zudem ist vorteilhaft, dass die Einstellung der Werte für die Bremswirkung und/oder für die Rücknahme der Fahrtgeschwindigkeit entsprechend der Hangneigung des Erntefeldes erfolgt, so dass insbesondere bei einer Bergabfahrt gleichfalls ein zu abruptes Stoppen der Erntemaschine und damit ein in Kontakt kommen des Erntevorsatzgerätes der Erntemaschine mit dem Feldboden vermeidbar ist und somit Schäden an der Erntepflanze und dem Erntvorsatzgerät verhindert werden können. Im Weiteren können vorteilhaft auch per se die Erntegeschwindigkeit der Erntemaschine, wie auch das Gewicht des Erntevorsatzgerätes bei der Einstellung des Wertes für die Bremswirkung und/oder für die Rücknahme des wenigstens einen Energsespetchermediums Berücksichtigung finden, die das Abbremsen der Erntemaschine beeinflussen.

In einer vorteilhaften Weiterbildung der Erfindung können die Schwellwerte manuell festgelegt werden, so dass der Bediener die Möglichkeit hat, die Einstellung des Wertes für die Bremswirkung und/oder für die Rücknahme des wenigstens einen Energiespeichermediums nach seinem Ermessen steuern zu können, Es ist darüber hinaus auch denkbar, dass die Schwellwerte der entsprechenden Erntebetnebsparameter über entsprechende Sensoren selbsttätig erfasst werden, so dass der Fahrer von einer Kontrolle entbunden wird und sich allein auf den Erntebetrieb konzentrieren kann.

Bei einem besonders bevorzugten Ausführungsbeispiel erfolgt das Abbremsen und/oder die Rücknahme des wenigstens einen Energiespeichermediums zur Reduzierung der Fahrtgeschwsndigkeit der Erntemaschine in Abhängigkeit vom über den vom Fahrhebel vorgegebenen Geschwindigkeits-Sollwert, Der Bediener kann sich somit besser darauf einsteigen, dass im Falle einer Fremdkörpererkennung der Bremsvorgang so erfolgt, als wenn er den Fahrhebel von der aktuell gewählten Fahrtgeschwindigkeitsposition in die Nullposition zurückführen würde, so dass eine potentielle Verletzungsgefahr für den Bediener vermieden wird,

In einer weiteren vorteilhaften Weiterbildung der Erfindung wird beim Erkennen eines Fremdkörpers im Erntegutstrom die Rücknahme der Fahrtgeschwindigkeit mittels wenigstens eines Signalmittels, vorzugsweise akustisch und/oder optisch, signalisiert, so dass sichergestellt ist, dass der Bediener der Erntemaschine selbst oder Bediener anderer Fahrzeuge über das Erkennen eines Fremdkörpers im Erntegutstrom informiert sind.

Damit sichergestellt ist, dass ein der Erntemaschine nachfolgendes Fahrzeug über die Erkennung eines Fremdkörpers im Erntegutstrom der Erntemaschine informiert ist und selbst rechtzeitig einen Bremsvorgang, zur Vermeidung einer Kollision mit der vorausfahrenden Erntemaschine, einleiten kann, ist in einer vorteilhaften Ausgestaltung der Erfindung das Signalmittel die Bremsiichteinrichiung der Erntemaschine,

Indem das Abbremsen und/oder die Rücknahme des Energiespeichermediums zeitlich nach dem Erkennen eines Fremdkörpers im Erntegutstrom erfolgt, wenn sich die Überiadeeinrichtung in einer rückwärtigen Überladeposition befindet, ist sichergestellt, dass den Bedienern der Erntemaschine nachfolgenden Fahrzeuge genügend Reaktionszeit verbleibt, um selbst einen Bremsvorgang bzw. ein Ausgleichmanöver zu starten, um eine Kollision mit der vorausfahrenden Erntemaschine zu verhindern.

In einer vorteilhaften Weiterentwicklung der Erfindung erfolgt beim Erkennen eines Fremdkörpers im Erntegutstrom ein Verschwenken der Überladeeinrichtung in Fahrtrichtung, wenn sich die Überladeeinrichtung in einer seitlichen Überladeposition befindet, wobei das Verschwenken der Überladeeinrichtung im Verhältnis zum Wert für die Bremswirkung und/oder für die Rücknahme des Energiespeichermediums zur Reduzierung der Fahrtgeschwindigkeit der Erntmaschine vollzogen wird. Damit ist sichergestellt, dass im Erntebetrieb während des Überladevorgangs von Erntegut auf ein nebenherfahrendes Fahrzeug kein Erntgutverlust eintritt, wenn das nebenherfahrende Fahrzeug nicht zeitgleich und mit gleicher Wirkung wie die Erntemaschine den Bremsvorgang einleitet, sondern der Erntemaschine dann teilweise vorauseilt.

Dadurch, dass bei einer Fremdkörpererkennung im Erntegutstrom die Einzugsvorrichtung, insbesondere eine Pickup, automatisch aus einer bodennahen Arbeits- und Betriebsstellung in eine zumindest teilweise ausgehobene Vorgewendestellung überführt wird, kann insbesondere bei zum Schwaden abgelegtem Erntegut effektiv das Aufstauen des Erntegutes vermieden werden, Zur Verstärkung dieses Effektes erfolgt dabei vorzugsweise gleichzeitig das Abbremsen und/oder die Rücknahme des Energiespeichermediums zur Reduzierung der Fahrgeschwindigkeit der Erntemaschine.

In einer vorteilhaften Weiterbildung der Erfindung erfolgt mit der Überführung der Einzugsvorrichtung von der bodennahen Arbeits- und Betriebsstellung in eine zumindest teilweise ausgehobene Vorgewendestellung eine Umkehr der Antriebsbewegung der Einzugsvorrichtung, so dass bereits in der Einzugsvorrichtung vorhandenes Erntegut durch das Reversieren ausgeräumt wird und der Bediener ohne zusätzlichen Zeitverlust den Erntebetrieb wieder aufnehmen kann.

Weitere vorteilhafte Ausgestaltungen sind Gegenstand weiterer Unteransprüche und werden nachfolgend anhand von Zeichnungen näher erläutert.

Es zeigen:
- Figur 1:: eine schematische Darstellung einer landwirtschaftlichen Erntemaschine in Form eines Feldhäckslers mit einer Fremdkörpererkennungseinrichtung
- Figur 2:: eine Ansicht auf eine als Feldhäcksler ausgeführte landwirtschaftliche Erntemaschine mit nebenher fahrendem Transportfahrzeug in Form eines Schleppers

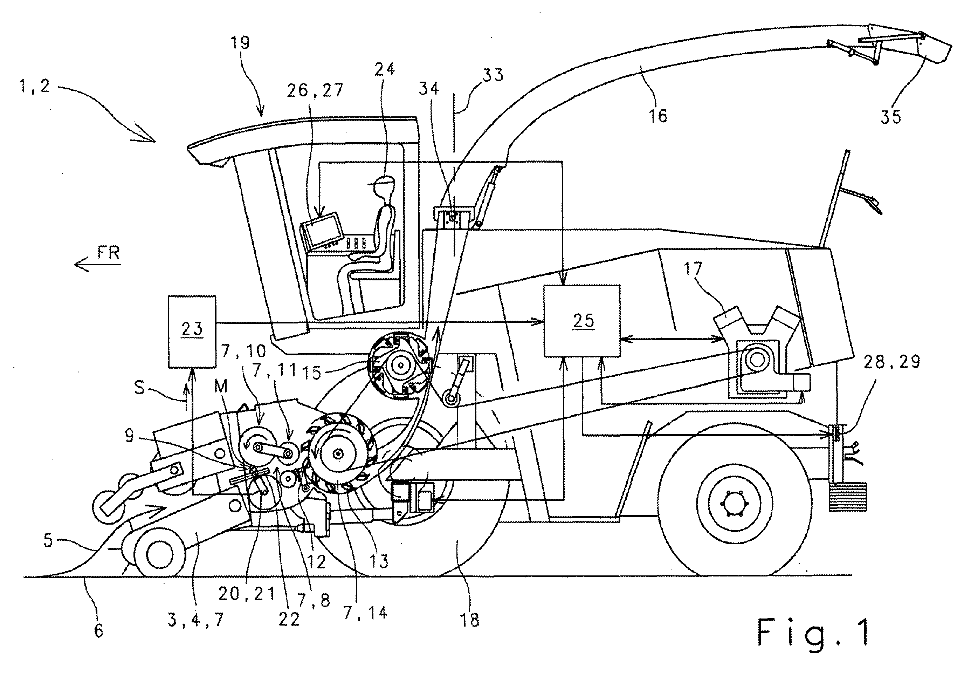

Figur 1 zeigte eine landwirtschaftliche Erntemaschine 1 in Form eines Feldhäckslers 2. In Fahrtrichtung FR vorne am Feldhäcksler 2 ist ein als Pickup 3 ausgeführtes Emtevorsatzgerät 4 angeordnet. Mittels des Emtevorsatzgerätes 4 wird das Erntegut 5 vom Feldboden 6 aufgenommen und den nachgeordneten Arbeitsorganen 7 zugeführt, Das mehrere Meter breite Erntevorsatzgerät 4 führt dabei das aufgenommene Erntegut 5 in einen wesentlich schmaleren, der Breite des Förderkanals 8 entsprechenden Einzugsbereich 9 zusammen. Über diesen Einzugsbereich 9 wird das Erntegut 5 von einem ersten Vorpresswalzenpaar 10 angenommen und verdichtet. Dem ersten Vorpresswalzenpaar 10 ist ein zweites Vorpresswalzenpaar 11 nachgeordnet, welches das vorverdichtete Erntegut 5 weiter zu einem Erntegutstrang verdichtet und den Erntegutstrang über eine Gegenschneide 12 den Häckselmessern 13 der Häckseltrommel 14 zuführt. An der unmittelbar vor der Häckseltrommel 14 angeordneten Gegenschneide 12 wird das Erntegut 5 von den Häckselmessern 13 zerschnitten und von dem der Häckseltrommel 14 nachgeordneten Nachbeschleuniger 15 beschleunigt und über einer sich anschließenden Überladevorrichtung 16 aus dem Feldhäcksler 2 gefördert und dabei beispielsweise auf ein hier nicht dargestelltes Transportfahrzeug überladen. Der Fahrantrieb der Erntemaschine 1 erfolgt über einen zentralen Antriebsmotor 17. Über eine nicht näher dargestellte Antriebswelle ist das hier nicht dargestellte Fahrgetriebe mit den Antriebsrädern 18 des Feldhäckslers 2 verbunden, Die Regelung der Fahrgeschwindigkeit erfolgt dabei über einen an sich bekannten nicht näher dargestellten Fahrhebel, der als Handhebel oder als Fußhebel ausgebildet sein kann und in der Fahrerkabine 19 angeordnet ist.

Innerhalb der unteren Vorpresswalze des ersten Vorpresswafzenpaares 10 ist eine Fremdkörpererkennungsvorrichtung 20 in Form eher Metalldetektbnseinrichtung 21 angeordnet, mit der metallische Teile 22 im Erntegutstrom sensiert werden können, Denkbar ist zudem, dass die Fremdkörpererkennungseinrichtung 20 als Steindetektor ausgebildet ist. Der Aufbau und die Funktion einer an sich bekannten Metalldetektionseinrichtung 21 ist näher in der DE 10 2005 005 736 A1 beschrieben, auf deren Inhalt vollumfängliche Bezug genommen wird, Die Metalldetektionseinrichtung 21 arbeitet hierzu mit einem Magnet-Messfeld M, weiches nach oben in den Erntegutstrom ausgerichtet ist, so dass das Erntegut 5 dieses Magnetfeld M durchläuft, Metallteil 22 führen zu einer Veränderung des Mess-Magnetfeldes M, welche von der Metalldetektionseinrichtung 23 erkannt werden, Diese Veränderungen des Magnet-Messfeldes M werden an ein nicht näher dargestelltes Signalmodul übertragen, welches abhängig von den Spannungsveränderungen, Detektionssignale S erzeugt, welche an eine Signalauswerteeinrichtung 23 übermittelt werden, Die Signalauswerteeinrichtung 23 ist ihrerseits mit einer an sich bekannten und deshalb nicht dargestellten Schnellstopvorrichturig verbunden, welche dann für ein sofortiges Anhalten der Vorpresswalzen 10,11 sowie des Erntevorsatzgerätes 4 sorgt. Damit das Metallteil 22 zusammen mit dem bereits aufgenommenen Erntegut 5 aus dem Feldhäcksler 2 hinausgeführt wird, löst der Bediener 24 einen Reversiervorgang aus, bei dem die gemeinsam angetriebenen Vorpresswalzen 10,11 und das Erntevorsatzgerät 4 in umgekehrter Richtung angetrieben werden.

Bislang erfolgte nach Erkennung eines Fremdkörpers im Erntegutstrom das Abstoppen der Erntemaschine 1 durch den Bediener 24 selbst, in Abhängigkeit von dessen Reaktionszeit jedoch stets zeitlich verzögert, so dass die Erntemaschine 1 mit gestoppten Erntevorsatzgerät 4 und gestoppten Einzugsorganen 10,11 das vor sich befindende und noch zu erntende Erntegut 5 mehrere Meter vor sich hergeschoben hat und dadurch Aufstauungen von Erntegut 5 bewirkt hat. Diese Aufstauungen sind dann vom Bediener 24 häufig manuell zu beseitigen, damit nach Entfernen des Fremdkörpers aus dem Erntegutstrom bzw. den Arbeitsorganen 7 der Erntemaschine 1 der Erntebetrieb fortgesetzt werden kann, was einen erheblichen Zeitverlust für den Erntebetrieb bedeutet.

Hier setzt nun die Erfindung an, die vorsieht, dass beim Erkennen eines Fremdkörpers im Erntegutstrom durch die Fremdkörpererkennungsvorrichtung 20 automatisch das Abbremsen und/oder die Rücknahme des wenigstens einen Energiespeichermediums zur Reduzierung der Fahrtgeschwindigkeit der Erntemaschine 1 erfolgt, um ein Aufstauen von Erntegut 5, wie z.B. von in Schwaden abgelegtes Gras bzw. ein Überfahren und Niederdrücken des noch zu erntenden Erntegutes 5, wie z.B. Mais, vermeiden zu können. Dabei kann das wenigstens eine Energiespeichermedium, wie in Erntemaschinen bekannt und daher nicht näher dargestellt, der Kraftstoff zum Betreiben des Antriebsmotors 17 der die Antriebsleistung für den Fahrantrieb zur Verfügung stellt und/oder das Öl zum Betreiben eines hydrostatischen Fahrantriebs sein, Vorzugsweise ist dabei der Wert für die Bremswirkung und/oder für die Rücknahme des Energiespeichermediums einstellbar, so dass durch die Möglichkeit der variablen Einstellung, stets die situations- bzw. erntebedingt optimale Einstellung gewählt werden kann. Dazu ist die Fremdkörpererkennungsvorrichtung 20 mit einem Steuergerät 25 zur Steuerung der Bremswirkung der an sich bekannten und hier nicht näher dargestellten Bremseinrichtung und/oder zur Steuerung der Rücknahme des Energtespeichermediums in Form eines hier nicht dargestellten Fahrhebels zur Reduzierung der Fahrtgeschwindigkeit der Erntemaschine 1 verbunden. Dabei wird das Detektionssignal S an das Steuergerät 25 Übergeben und in dem Steuergerät 25 hinterlegt. Das Steuergerät 25 ist außerdem mit einer Einstellvorrichtung 26 und der Schnelistopeinrichtung verbunden. Die Einstellvorrichtung 26 regelt die Einstellung des Wertes der Bremswirkung und/oder des Wertes für die Rücknahme des Energiespeichermediums zur Reduzierung der Fahrgeschwindigkeit der Erntemaschine 1 im Falle einer Fremdkörpererkenrurig, Grundsätzlich ist vorgesehen, dass das Abbremsen und/oder die Rücknahme des Energiespeichermediums zur Reduzierung der Fahrtgeschwindigkeit der Erntemaschine 1 solange erfolgt, bis der Stillstand der Erntemaschine 1 erreicht ist. Denkbar ist jedoch auch, dass ein frei definierbarer Fahrtgeschwindigkeitsbereich nicht unterschritten wird, In der mit dem Steuergerät 25 verbundenen Einstellvorrichtung 26 sind Schwellwerte in Abhängigkeit von Erntebetriebsparameter als Grundlage für die Einstellung der Werte für die Bremswirkung und/oder für die Rücknahme des Energiespeichermediums bei einer Fremdkörpererkennung eingebbar. Die Schwellwerte sind vom Bediener 24 festlegbar und können nach seinem Ermessen verändert werden. Als Erntebetriebsparameter kommen insbesondere die Erntegutart, die Fahrgeschwindigkeit der landwirtschaftlichen Erntemaschine 1 per se oder die Hangneigung des Erntefeldes in Betracht, so dass vorteilhaft eine Entlastung des Bedieners der landwirtschaftlichen Erntemaschine 1 erreicht werden kann, indem eine genaue und auf aktuelle Erntebedingungen abgestimmte Festlegung der Schwellwerte der Erntebetriebsparameter gewährleistet ist, Insbesondere gibt es in Abhängigkeit von den Erntegutarten unterschiedliche Fahrtgeschwindigkeiten, wie z.B. einer höheren Fahrtgeschwindigkeit in der Grasernte gegenüber einer geringeren in der Maisernte, wobei bei einer höheren Fahrtgeschwindigkeit grundsätzlich ein niedrigerer Wert eingestellt wird, um ein abruptes Stoppen der Erntemaschine 1 aus einer höheren Fahrtgeschwindigkeit heraus zu vermeiden, welches z.T. erhebliche Verletzungen für den Bediener 24 zur Folge hätte.

Die Einstellvorrichtung 26 kann dabei so ausgebildet sein, dass die Schwellwerte der Erntebetnebsparameter vom Bediener 24 von der Fahrerkabine 19 aus über ein Bedienfeld 27 manuell eingegeben werden, Es ist zudem denkbar, dass die Schwellwerte der Erntebetriebsparameter über entsprechende hier nicht näher dargestellte Sensoren selbsttätig erfasst werden, so dass der Bediener 24 von einer Kontrolle der Erntebetriebsparameter entbunden wird und sich allein auf den Erntebetrieb konzentrieren kann. Zudem ist vorgesehen, dass die Einstellung der Werte für die Bremswirkung und/oder für die Rücknahme des Energiespeichermediums zur Reduzierung der Fahrgeschwindigkeit entsprechend der Hangneigung des Emtefeldes erfolgt, so dass insbesondere bei einer Bergabfahrt gleichfalls ein zu abruptes Stoppen der Erntemaschine 1 und damit ein in Kontakt kommen des Erntevorsatzgerätes 4 der Erntemaschine 1 mit dem Feldboden 6 vermeidbar ist und somit Schäden an der Erntepflanze und dem Erntvorsatzgerät 4 verhindert werden können. Im weiteren können vorteilhaft auch per se die Erntegeschwindigkeit der Erntemaschine 1, wie auch das Gewicht des Erntevorsatzgerätes 4 bei der Einstellung des Wertes für die Bremswirkung und/oder für die Rücknahme des Energiespeichermediums Berücksichtigung finden, um insbesondere bei sehr großen und schweren Erntevorsatzgerätes 4, ein zu extremes nach vorne Neigen, als Folge eines abrupten Stoppens der Erntemaschine 1, zu verhindern, zur Vermeidung von Schäden am Erntevorsatzgerät 4. Zudem kann die Einstellung des Wertes für die Bremswirkung und/oder für die Rücknahme der Fahrgeschwindigkeit entsprechend der Hangneigung des Erntefeldes erfolgen, so dass insbesondere bei einer Bergabfahrt gleichfalls ein zu abruptes Stoppen der Erntemaschine 1 und damit ein in Kontakt kommen des Erntevorsatzgerätes 4 der Erntemaschine mit dem Feldboden 6 vermeidbar ist, um somit Schäden an der Erntepflanze und dem Erntvorsatzgerät 4 zu verhindern.

Ferner ist vorgesehen, dass das Abbremsen und/oder die Rücknahme des Energiespeichermediums zur Reduzierung der Fahrtgeschwindigkeit der Erntemaschine 1 in Abhängigkeit vom über den vom Fahrhebel vorgegebenen Geschwindigkeits-Sollwert erfolgt. Dadurch, dass der Bediener 24 somit bereits vor einer Fremdkörpererkennung an die Wirkung des Bremsvorgangs zur Rücknahme der Fahrtgeschwindigkeit bei einer Fremdkörpererkennung gewöhnt ist, kann eine potentielle Verletzungsgefahr für den Bediener 24 weitestgehend vermieden werden. Im einfachsten Fall kann vorgesehen sein, dass das Steuergerät 25 im Falle einer Fremdkörpererkennung automatisch mittels geeigneter hier nicht näher dargestellter Mittel, die Fußbremse betätigt, so dass auf einfache Weise das Abbremsen der Erntemaschine 1 erreichbar und damit das Aufstauen von Erntegut 5 vermeidbar sind. Im Weiteren ist denkbar, dass mit dem Erkennen eines Fremdkörpers im Erntegutstrom neben dem Abbremsen und/oder der Rücknahme des Energiespeichermediums zur Reduzierung der Fahrtgeschwindigkeit eine Reduktion der Motordrehzahl des Antriebsmotors 17 erfolgt, um so zusätzlich eine Reduktion der Fahrtgeschwindigkeit der Erntemaschine 1 erreichen zu können,

Zusätzlich kann beim Erkennen eines Fremdkörper im Erntegutstrom die Rücknahme der Fahrtgeschwindigkeit mittels wenigstens eines, hier als Bremslichteinrichtung 28, ausgebildeten Signalmittels 29 akustisch und/oder optisch signalisiert werden, so dass Bediener von der Erntemaschine 1 nachfolgenden Fahrzeuge über das Aufleuchten der Bremslichteinnchtung 28 gewarnt sind, um somit selbst rechtzeitig einen Bremsvorgang, zur Vermeidung einer Kollision mit der Erntemaschine, einleiten zu können.

In einer weiteren Ausführungsform erfolgt beim Erkennen eines Fremdkörpers im Erntegutstrom, die Überführung des Erntevorsatzgerätes 4, vorlegend als Pickup 3 ausgeführt, automatisch aus der hier dargestellten bodennahen Arbeits- und Betriebsstellung in eine nicht dargestellte zumindest teilweise ausgehobene Vorgewendestellung, so dass sichergestellt ist, dass beispielhaft zum Schwad abgelegtes Erntegut 5, wie z.B. Gras, trotz des Weiterfahrens der Erntemaschine 1 nicht aufgestaut wird. Denkbar ist zudem, dass mit dem Überführen der Pickup 4 aus der Arbeits- und Betriebsstellung in eine zumindest teilweise ausgehobene Vorgewendestellung gleichzeitig die Erntemaschine 1, wie in Fig. 1 bereits dargestellt, abgebremst und/oder eine Rücknahme des Energiespeichermediums zur Reduzierung der Fahrtgeschwindigkeit zurückgenommen wird, so dass sehr effektiv Aufstauungen von Erntegut 5 bei einer Fremdkörpererkennung vermieden werden können. Vorzugsweise erfolgt mit der Überführung des Erntevorsatzgerätes 4 von der bodennahen Arbeits- und Betriebsstellung in eine zumindest teilweise ausgehobene Vorgewendestellung eine Umkehr der Antriebsbewegung der Arbeitsorgane 7, so dass bereits in den Arbeitsorganen 7 vorhandenes Erntegut 5 durch das Reversieren ausgeräumt wird und der Bediener 24 ohne zusätzlichen Zeitverlust den Erntebetrieb wieder aufnehmen kann.

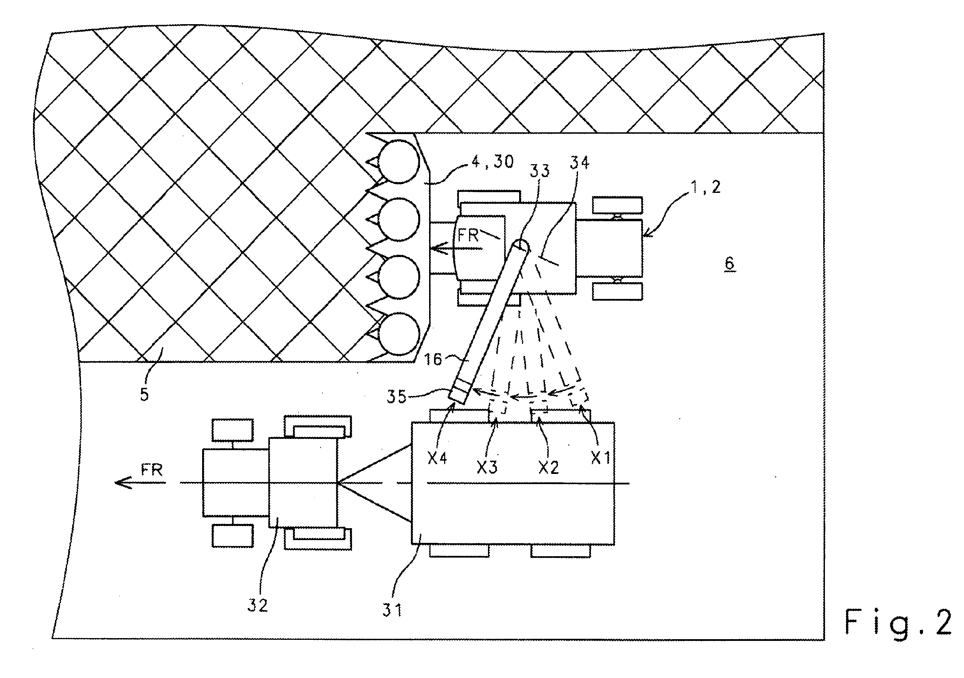

In der Fig. 2 wird ein Feldhäcksler 2 in Draufsicht dargestellt, Frontseitig ist dem Feldhäcksler ein Erntevorsatzgerät 4, vorliegend ein Maisgebiss 30, zugeordnet, welches das Erntegut 5 schneidet, aufnimmt und einer nicht abgebildeten Häckselvorrichtung zuführt. Das zerkleinerte Erntegut 5 wird dann über eine Überladevorrichtung 16 an eine Transportvorrichtung 31 übergeben. Die Transportvorrichtung 31 ist an einem Schlepper 32 adaptiert, der im Idealfall parallel neben oder, wie hier jedoch nicht abgebildet, unmittelbar hinter dem Feldhäcksler 2 fährt. In an sich bekannter Weise ist die hinter der Fahrerkabine 19 angeordnete Überladevorrichtung 16 um eine senkrechte Drehachse 33 und zur Veränderung der Höheneinstellung um eine horizontale Achse 34 verschwenkbar. Darüber hinaus kann die Weite des ausgeworfenen Erntegutstrahls durch eine auf- und absenkbare Überladeklappe 35 gesteuert werden, Wird die Übenadeklappe 35 aufwärtig verschwenkt, wird der Erntegutstrahl weiter, wird die Überladeklappe 35 abwärtig verschwenkt, wird der Erntegutstrahl weniger weit geworfen. Während der Erntefahrt stellt sich für den Bediener 24 einer landwirtschaftlichen Erntemaschine 1 das Problem, das im Fall einer Fremdkörpererkertnung die Erntemaschine 1 abgebremst wird, jedoch gleichzeitig noch Erntegut 5 über die Überladevorrichtung 16 ausgeworfen wird. Im Regelfall wird der Bediener der nebenherfahrenden Transportvorrichtung 31 bei einer Fremdkörpererkennung nicht zeitgleich wie die Erntemaschine 1 selbst den Bremsvorgang starten, so dass es seine Idealposition aufgeben und der Erntemaschine 1 vorauseilen wird, und dass dann das noch zu überladene Erntegut 5 nicht auf die Transportvorrichtung 31 sondern vielmehr hinter der Transportvorrichtung 31 auf den Feldboden 6 geworfen wird. Erfindungsgemäß ist nun vorgesehen, dass, wenn die Überladevorrichtung 16 eine seitliche Überladeposition X1-X4 einnimmt und eine Fremdkörpererkennung vorliegt, die Über!adevorrichtung 16, in Fahrtrichtung FR verschwenkt wird, so dass die Überladevorrichtung 16 dem vorausseilenden Transportfahrzeug 32, nacheilt, um das restliche, sich in der Erntemaschine 1 befindliche Erntegut 5 auf die Transportvorrichtung 31 überwerfen zu können, Vorzugsweise erfolgt dabei das Verschwenken der Überladevorrichtung 16 im gleichen Verhältnis wie das Abbremsen und/oder die Rücknahme der Fahrtgeschwindigkeit der Erntemaschine 1 beim Erkennen eines Fremdkörpers im Erntegutstrom erfolgt, so dass möglichst eine Beibehaltung des nicht näher dargestellten Auftreffpunktes des Erntegutstrahls auf die Transportvornchtung 31 erreichbar ist. Im Falle, dass sich die Transportvorrichtung 31 hinter der Erntemaschine 1 befindet und die Überladevorrichtung 16 im Erntebetrieb eine nicht dargestellte rückwärtige Position einnimmt, erfolgt beim Erkennen eines Fremdkörpers durch die Fremdkörpererkennungsvorrichtung 20 das Abbremsen bzw. die Rücknahme der Fahrtgeschwindigkeit der Erntemaschine 1 zeitlich nach der Fremdkörpererkennung, so dass Bediener der Erntemaschine 1 nachfolgenden Transportfahrzeuge 32 selbst noch frühzeitig einen Bremsvorgang einleiten und eine Kollision mit de Erntemaschine 1 vermeiden können.

Es liegt im Rahmen des Könnens eines Fachmanns das beschriebene Ausführungsbeispiel in nicht dargestellter Weise abzuwandeln oder in anderen Maschinen einzusetzen, um die beschriebenen Effekte zu erzielen, ohne dabei den Rahmen der Erfindung zu verlassen,

### Bezugszeichenliste:

- 1: Landwirtschaftliche Erntemaschine
- 2: Feldhäcksler
- 3: Pickup
- 4: Erntevorsatzgerät
- 5: Erntegut
- 6: Feldboden
- 7: Arbeitsorgan
- 8: Förderkanal
- 9: Einzugsbereich
- 10: Vorpresswalzenpaar
- 11: Vorpresswalzenpaar
- 12: Gegenschneide
- 13: Häckselmesser
- 14: Häckseltrommel
- 15: Nachbeschleuniger
- 16: Überladvorrichtung
- 17: Antriebsmotor
- 18: Antriebsräder
- 19: Fahrerkabine
- 20: Fremdkörperekennungsvorrichtung
- 21: Metalldetektionseinrichtung
- 22: Metallteil
- 23: Signalauswerteeinrichtung
- 24: Bediener
- 25: Steuergerät
- 26: Einstellvorrichtung
- 27: Bedienfeld
- 28: Bremslichteinrichtung
- 29: Signalmittel
- 30: Maisgebiss
- 31: Transportvorrichtung
- 32: Schlepper, Transportfahrzeug
- 33: Senkrechte Drehachse
- 34: Horizontale Drehachse
- 35: Überladeklappe

- FR: Fahrtrichtung
- M: Mess-Magnetfeld
- S: Detektionssignal
- X: Überladeposition

## Patentansprüche

1. Landwirtschaftliche Erntemaschine zum Ernten und/oder Weiterverarbeiten von Erntegut mit einer Überladeinrichtung zum Überladen von Erntegut und mit einer eine Fremdkörpererkennungsvorrichtung zur Erkennung von Fremdkörpern in einem Überwachungsbereich eines Erntegutstromes umfassende Einzugsvorrichtung,
**dadurch gekennzeichnet, dass**
beim Erkennen eines Fremdkörpers im Erntegutstrom durch die Fremdkörpererkennungsvorrichtung (20) automatisch die landwirtschaftliche Erntemaschine (1) abgebremst und/oder die Rücknahme wenigstens eines Energiespeichermediums zur Reduzierung der Fahrtgeschwindigkeit erfolgt, wobei der Wert für der Bremswirkung und/oder für die Rücknahme des Energiespeichermediums einstellbar sind.

2. Landwirtschaftliche Erntemaschine nach Anspruch 1,
**dadurch gekennzeichnet, dass**
das wenigstens eine Energiespeichermedium der Kraftstoff zum Betreiben des Antriebsmotors der landwirtschaftlichen Erntemaschine und/oder das Öl zum Betreiben eines hydrostatischen Fahrantriebes ist.

3. Landwirtschaftliche Erntemaschine nach Anspruch 1,
**dadurch gekennzeichnet, dass**
das Abbremsen und/oder die Rücknahme des wenigstens einen Energiespeichermediums der Erntemaschine (1) in Abhängigkeit von wenigstens einem Schwellwert einstellbar sind.

4. Landwirtschaftliche Erntemaschine nach Anspruch 3,
**dadurch gekennzeichnet, dass**
die Schwellwerte die Erntegutart, die Fahrtgeschwindigkeit der landwirtschaftlichen Erntemaschine (1), das Gewicht des Erntevorsatzgerätes (4) oder die Hangneigung des Erntefeldes sind.

5. Landwirtschaftliche Erntemaschine nach einem der Ansprüche 3 oder 4,
**dadurch gekennzeichnet, dass**
die Schwellwerte manuell oder selbsttätig festgelegt werden können.

6. Landwirtschaftliche Erntemaschine nach wenigstens einem der vorhergehenden Ansprüche,
**dadurch gekennzeichnet, dass**
das Abbremsen und/oder Rücknahme des Energiespeichermediums zur Reduzierung der Fahrgeschwindigkeit der Erntemaschine (1) in Abhängigkeit vom über den vom Fahrhebel vorgegebenen Geschwindigkeits-Sollwert erfolgt.

7. Landwirtschaftliche Erntemaschine nach wenigstens einem der vorhergehenden Ansprüche,
**dadurch gekennzeichnet, dass**
beim Erkennen eines Fremdkörpers im Erntegutstrom die Rücknahme der Fahrtgeschwindigkeit mittels eines Signalmittels akustisch und/oder optisch signalisiert wird.

8. Landwirtschaftliche Erntemaschine nach Anspruch 7,
**dadurch gekennzeichnet, dass**
das wenigstens eine Signalmittel die Bremslichteinrichtung (29) der Erntemaschine (1) ist.

9. Landwirtschaftliche Erntemaschine nach wenigstens einem der vorhergehenden Ansprüche,
**dadurch gekennzeichnet, dass**
das Abbremsen und/oder die Rücknahme der Fahrtgeschwindigkeit der Erntemaschine zeitlich nach dem Erkennen eines Fremdkörpers im Erntegutstrom erfolgt, wenn sich die Überladevorrichtung (16) in einer rückwärtigen Überladeposition (X) befindet.

10. Landwirtschaftliche Erntemaschine nach wenigstens einem der vorhergehenden Ansprüche,
**dadurch gekennzeichnet, dass**
bei einer seitlichen Überladeposition (X1-X4) der Überladevorrichtung (16) beim Erkennen eines Fremdkörpers im Erntegutstrom ein Verschwenken der Überladevorrichtung (16) in Fahrtrichtung (FR) erfolgt, wobei das Verschwenken der Überladevorrichtung (16) im Verhältnis zum Wert des Abbremsens und/oder der Rücknahme der Fahrtgeschwindigkeit der Erntemaschine (1).

11. Landwirtschaftliche Entemaschine nach wenigstens einem der vorhergehenden Ansprüche,
**dadurch gekennzeichnet, dass**
die Fremdkörpererkennungsvorrichtung (20) als Stein- bzw. Metalldetektionseinrichtung (21) ausgebildet ist.

12. Landwirtschaftliche Erntemaschine nach wenigstens einem der vorhergehenden Ansprüche,
**dadurch gekennzeichnet, dass**
beim Erkennen eines Fremdkörpers im Erntegutstrom durch die Fremdkörpererkennungsvorrichtung (20) die Einzugsvorrichtung, insbesondere eine Pickup (3), aus einer bodennahen Arbeits- und Betriebsstellung in eine zumindest teilweise ausgehobene Vorgewendestellung überführt wird.

13. Landwirtschaftliche Erntemaschine nach Anspruch 11,
**dadurch gekennzeichnet, dass**
gleichzeitig das Abbremsen und/oder die Rücknahme der Fahrgeschwindigkeit der Erntemaschine (1) erfolgt.

14. Landwirtschaftliche Erntemaschine nach Anspruch 11 oder 13,
**dadurch gekennzeichnet, dass**
die Überführung der Einzugsvorrichtung aus einer bodennahen Arbeits- und Betriebsstellung in eine zumindest teilweise ausgehobene Vorgewendestellung manuell vom Bediener oder automatisch mittels einer Steuereinrichtung (26) erfolgt.

15. Landwirtschaftliche Erntemaschine nach einem der Ansprüche 13 bis 15,
**dadurch gekennzeichnet, dass**
dass mit der Überführung der Einzugsvorrichtung von der bodennahen Arbeits- und Betriebsstellung in eine zumindest teilweise ausgehobene Vorgewendestellung eine Umkehr der Antriebsbewegung der Einzugsvorrichtung erfolgt.

## Claims

1. An agricultural harvesting machine for harvesting and/or further processing crop material comprising a transfer device for transferring crop material and an intake device including a foreign body detection device for detecting foreign bodies in a monitoring region of a crop material flow,
**characterised in that**
upon detection of a foreign body in the crop material flow by the foreign body detection device (20) the agricultural harvesting machine (1) is automatically braked and/or at least one energy storage medium is withdrawn to reduce the speed of travel, wherein the value for the braking action and/or for withdrawal of the energy storage medium is adjustable.

2. An agricultural harvesting machine according to claim 1 **characterised in that** the at least one energy storage medium is the fuel for operating the drive engine of the agricultural harvesting machine and/or the oil for operating a hydrostatic travel drive.

3. An agricultural harvesting machine according to claim 1 **characterised in that** braking and/or withdrawal of the at least one energy storage medium of the harvesting machine (1) are adjustable in dependence on at least one threshold value.

4. An agricultural harvesting machine according to claim 3 **characterised in that** the threshold values are the kind of crop material, the travel speed of the agricultural harvesting machine (1), the weight of the front-mounted harvesting implement (4) or the slope of the crop field.

5. An agricultural harvesting machine according to one of claims 3 and 4 **characterised in that** the threshold values can be established manually or automatically.

6. An agricultural harvesting machine according to at least one of the preceding claims **characterised in that** braking and/or withdrawal of the energy storage medium for reducing the travel speed of the harvesting machine (1) is effected in dependence on the speed reference value which is predetermined by the travel lever.

7. An agricultural harvesting machine according to at least one of the preceding claims **characterised in that** when a foreign body is detected in the crop material flow the reduction in the travel speed is signalled by means of a signalling means acoustically and/or optically.

8. An agricultural harvesting machine according to claim 7 **characterised in that** the at least one signalling means is the brake light device (29) of the harvesting machine (1).

9. An agricultural harvesting machine according to at least one of the preceding claims **characterised in that** braking and/or reduction in the travel speed of the harvesting machine is effected in relation to time after the detection of a foreign body in the crop material flow when the transfer device (16) is in a rearward transfer position (X).

10. An agricultural harvesting machine according to at least one of the preceding claims **characterised in that** in the case of a lateral transfer position (X1-X4) of the transfer device (16) when a foreign body is detected in the crop material flow a pivotal movement of the transfer device (16) is effected in the travel direction (FR), wherein the pivotal movement of the transfer device (16) is in relation to the value of the braking effect and/or the reduction in the travel speed of the harvesting machine (1).

11. An agricultural harvesting machine according to at least one of the preceding claims **characterised in that** the foreign body detection device (20) is in the form of a stone or metal detection device (21).

12. An agricultural harvesting machine according to at least one of the preceding claims **characterised in that** when a foreign body is detected in the crop material flow by the foreign body detection device (20) the intake device, in particular a pickup (3), is transferred from a working and operating position near the ground into an at least partially raised pre-turnaround position.

13. An agricultural harvesting machine according to claim 11 **characterised in that** braking and/or reduction in the travel speed of the harvesting machine (1) are effected simultaneously.

14. An agricultural harvesting machine according to claim 11 or claim 13 **characterised in that** transfer of the intake device from a working and operating position near the ground into an at least partially raised pre-turnaround position is effected manually by the operator or automatically by means of a control device (26).

15. An agricultural harvesting machine according to one of claims 13 to 15 **characterised in that** with the transfer of the intake device from the working and operating position near the ground into an at least partially raised pre-turnaround position there is a reversal in the drive movement of the intake device.

## Revendications

1. Moissonneuse agricole pour la moisson et/ou la transformation de produit de récolte avec un dispositif de chargement pour le chargement de produit de récolte et avec un dispositif d'alimentation comportant un dispositif de détection de corps étrangers pour la détection de corps étrangers dans une zone de surveillance d'un flux de produit de récolte,
**caractérisée en ce que**
lors de la détection d'un corps étranger dans le flux de produit de récolte par le dispositif de détection de corps étrangers (20), la moissonneuse agricole (1) est automatiquement freinée et/ou la reprise d'au moins un produit d'accumulation d'énergie est effectuée pour la réduction de la vitesse de marche, la valeur de freinage et/ou de la reprise du produit d'accumulation d'énergie pouvant être réglée.

2. Moissonneuse agricole selon la revendication 1,
**caractérisée en ce que**
l'au moins un produit d'accumulation d'énergie est le carburant servant à l'exploitation du moteur d'entraînement de la moissonneuse agricole et/ou l'huile servant à l'exploitation d'un système d'entraînement hydrostatique.

3. Moissonneuse agricole selon la revendication 1,
**caractérisée en ce que**
le freinage et/ou la reprise de l'au moins un produit d'accumulation d'énergie de la moissonneuse (1) peut être réglée en fonction de l'au moins une valeur seuil.

4. Moissonneuse agricole selon la revendication 3,
**caractérisée en ce que**
les valeurs seuils sont le type de produit de récolte, la vitesse de marche de la moissonneuse agricole (1), le poids de l'appareil adaptable de récolte (4) ou l'inclinaison de pente du champ de récolte.

5. Moissonneuse agricole selon l'une quelconque des revendications 3 ou 4,
**caractérisée en ce que**
les valeurs seuils peuvent être déterminées manuellement ou automatiquement.

6. Moissonneuse agricole selon au moins l'une quelconque des revendications précédentes,
**caractérisée en ce que**
le freinage et/ou la reprise du produit d'accumulation d'énergie est effectuée pour la réduction de la vitesse de marche de la moissonneuse (1) en fonction de la valeur de consigne prescrite par la manette d'accélérateur.

7. Moissonneuse agricole selon au moins l'une quelconque des revendications précédentes,
**caractérisée en ce que**
lors de la détection d'un corps étranger dans le flux de produit de récolte, la reprise de la vitesse de marche est signalisée acoustiquement et/ou optiquement à l'aide d'un moyen de signal.

8. Moissonneuse agricole selon la revendication 7,
**caractérisée en ce que**
l'au moins un moyen de signal est le dispositif d'éclairage stop (29) de la moissonneuse (1).

9. Moissonneuse agricole selon au moins l'une quelconque des revendications précédentes,
**caractérisée en ce que**
le freinage et/ou la reprise de la vitesse de marche de la moissonneuse est effectuée temporellement après la détection d'un corps étranger dans le flux de produit de récolte si le dispositif de chargement (16) se trouve dans une position de chargement (X) arrière.

10. Moissonneuse agricole selon au moins l'une quelconque des revendications précédentes,
**caractérisée en ce que**
pour une position de chargement latérale (X1-X4) du dispositif de chargement (16) lors de la détection d'un corps étranger dans le flux de produit de récolte, un pivotement du dispositif de chargement (16) est effectué dans le sens de la marche (FR), le pivotement du dispositif de chargement (16) étant effectué par rapport à la valeur du freinage et/ou de la reprise de la vitesse de marche de la moissonneuse (1).

11. Moissonneuse agricole selon au moins l'une quelconque des revendications précédentes,
**caractérisée en ce que**
le dispositif de détection de corps étrangers (20) est réalisé comme un dispositif de détection de pierre ou de métal (21).

12. Moissonneuse agricole selon au moins l'une quelconque des revendications précédentes,
**caractérisée en ce que**
lors de la détection d'un corps étranger dans le flux de produit de récolte par le dispositif de détection de corps étrangers (20), le dispositif d'alimentation, en particulier une ramasseuse (3), est transféré d'une position de travail et de fonctionnement proche du sol à une position de fourrière soulevée au moins en partie.

13. Moissonneuse agricole selon la revendication 11,
**caractérisée en ce que**
le freinage et/ou la reprise de la vitesse de marche de la moissonneuse (1) est effectuée simultanément.

14. Moissonneuse agricole selon la revendication 11 ou 13,
**caractérisée en ce que**
le transfert du dispositif d'alimentation d'une position de travail et de fonctionnement proche du sol à une position de fourrière au moins en partie soulevée est effectué manuellement par l'opérateur ou automatiquement à l'aide d'un dispositif de commande (26).

15. Moissonneuse agricole selon l'une quelconque des revendications 13 à 15,
**caractérisée en ce**
**qu'**avec le transfert du dispositif d'alimentation de la position de travail et de fonctionnement proche du sol à une position de fourrière au moins en partie soulevée est effectuée une inversion du mouvement d'entraînement du dispositif d'alimentation.
